# EUROPEAN PATENT APPLICATION

(11) **EP 3 270 480 A1**
(43) Date of publication of application: **17.01.2018**
(21) Application number: 17180447.9
(22) Date of filing: 10.07.2017
(51) Int. Cl.: H02J 1/10, H02J 7/34, H02J 9/06, B60R 16/02, B60R 16/03, H02J 7/00

(54) **CHARGING CONTROL CIRCUIT IN IN-VEHICLE CHARGING CONNECTOR, IN-VEHICLE CHARGING CONNECTOR, AND IN-VEHICLE DATA-TRANSFER/CHARGING SYSTEM FOR EXTERNAL DEVICE**

(30) Priority: 13.07.2016 JP 2016138764
(71) Applicant: Mitsumi Electric Co., Ltd., Tama-Shi, Tokyo 206-8567 (JP)
(72) Inventor: TSUCHIYA, Susumu, Tama-shi, Tokyo 206-8567 (JP); HAMASUNA, Masahiro, Tama-shi, Tokyo 206-8567 (JP)
(74) Representative: Regimbeau

(57) **Abstract**

A charging-control circuit, connecting an in-vehicle apparatus with an external apparatus and enabling data-transfer therebetween, includes a DC-to-DC converter, to which a main power-supply's battery-voltage or the in-vehicle apparatus's bus-voltage is supplied, converting the supplied voltage to a predetermined voltage; an output controller controlling the data-transfer, and determining a current for the external apparatus; and an instantaneous-interruption measurement-circuit, preventing the data-transfer's instantaneous-interruption when the battery-voltage drops to below the predetermined voltage, including a first switch switching between supply and cut-off from the bus-voltage to the converter according to the battery-voltage, a resistor, connected between an output terminal to the external apparatus and the output controller, limiting an output current flowing to the output terminal, and a second switch, connected in parallel with the resistor and connected in series with the first switch, causing a current to flow to the resistor while the bus-voltage is supplied to the converter.

## Description

### BACKGROUND OF THE INVENTION

### 1. Field of the Invention

The present invention relates to a charging control circuit in an in-vehicle charging connector, an in-vehicle charging connector, and an in-vehicle data-transfer/charging system for an external device.

### 2. Description of the Related Art

Mobile apparatuses including a smartphone, a digital audio player, a tablet, etc., have been increasingly used in a vehicle. Accordingly, it is necessary for these mobile apparatuses to be charged.

Here, there is a case in which an in-vehicle connector with a USB port is mounted on the vehicle. The USB port is used for transferring data including music, images, etc., stored in a mobile apparatus (an external apparatus of the vehicle) to an in-vehicle apparatus including an audio system or a car navigation apparatus. By using the USB port, it is possible for the audio system or the car navigation apparatus mounted on the vehicle to display a title of a song or related information stored in the mobile apparatus, to perform operations such as selecting a song, to play video stored in the mobile apparatus, and, further, even to operate a map application in the mobile apparatus.

The USB standards of the USB port may be USB 1.1 or USB 2.0, and thus, it is assumed that a current output is only 0.5 [A]. As a result, in the case where the mobile apparatus such as a smartphone is charged via the USB port, the charging progresses only slowly and it will take very long time to complete the charging. Further, in the case where the mobile apparatus is being used while being charged, the charging amount is smaller with respect to the power consumption amount, and thus, effects may be only to the extent that a no battery power state is slightly delayed. Therefore, in the case of performing fast charging of a mobile apparatus in recent years such as a smartphone, which requires a current about 2 [A], it is not appropriate to use the USB port described above.

With respect to the above, as a method for performing fast charging of a mobile apparatus in a vehicle, a method has been proposed in which the charging of a mobile apparatus is performed by connecting the mobile apparatus to an in-vehicle charger such as a cigar socket USB charger (in-vehicle USB cigar charger) to which power is supplied from a main power supply of the vehicle.

However, the cigar socket USB charger alone cannot provide data transfer. The data transfer cannot be provided without using a mobile apparatus and a car navigation system that are compatible with auxiliary input or BLUETOOTH (registered trademark). Further, with the cigar socket USB charger, it is not possible to provide operations of the car navigation system linked with the mobile apparatus, which are available with the USB port described above.

Therefore, an in-vehicle charging connector is desired which is capable of providing the fast charging and capable of providing the data transfer to and from an in-vehicle apparatus.

### [Citation List]

### [Patent Literature]

[Patent Document 1] Japanese Unexamined Patent Application Publication No. 2004-251234

### SUMMARY OF THE INVENTION

There is a case in which, when a vehicle returns from an "idling stop (turning off a vehicle engine when stopped)", a voltage supplied by a battery drops sharply. In the case where, for example, music data in a mobile apparatus is being reproduced by using the above-described USB port of the vehicle, if the voltage drops to less than a predetermined voltage, then the data transfer is instantaneously interrupted, and, as a result, the music stops, which is a problem.

As a measurement for the instantaneous interruption, it is possible to have a capacitor mounted on the in-vehicle connector with the USB port. Although it is possible for the capacitor to prevent the instantaneous interruption by supplying the dropped amount of voltage, in the case of assuming the fast charging which requires a high current, a big-sized capacitor with high capacity is needed, and thus, the product (in-vehicle connector) will be bigger.

In recent years, it is increasingly required that an in-vehicle connector with a USB port as described above should be placed in a narrow space, for example, a console box or a door of a vehicle, and thus, it is necessary for the in-vehicle connector to be smaller. Therefore, as a measurement for the instantaneous interruption when a voltage in a vehicle drops sharply, it is difficult to have a capacitor with high capacity mounted on the in-vehicle connector.

In view of the above, it is an object of the present invention to provide a charging control circuit, which can prevent an instantaneous interruption of data transfer between an in-vehicle apparatus and an external apparatus, in an in-vehicle charging connector that is capable of providing fast charging of the external apparatus.

In view of the above, a charging control circuit in an in-vehicle charging connector according to an embodiment is provided. The in-vehicle charging connector is connected to a main power supply for a vehicle, connects an in-vehicle apparatus with a charging-target external apparatus, and enables data transfer between the in-vehicle apparatus and the external apparatus. The charging control circuit includes a DC-to-DC converter, to which a battery voltage input from the main power supply or a bus voltage input from the in-vehicle apparatus is supplied, which converts the supplied voltage to a predetermined voltage; an output controller that controls the data transfer between the in-vehicle apparatus and the external apparatus and determines a charging current for the external apparatus; and an instantaneous interruption measurement circuit that prevents an instantaneous interruption of the data transfer between the in-vehicle apparatus and the external apparatus when the battery voltage drops to less than the predetermined voltage. The instantaneous interruption measurement circuit includes a first switch that switches between supply and cut-off from the bus voltage to the DC-to-DC converter according to the battery voltage, a correction resistor that is connected between an output terminal connected to the external apparatus and the output controller and limits an output current flowing to the output terminal, and a second switch, connected in parallel with the correction resistor and connected in series with the first switch, that causes a current to flow to the correction resistor during a period when the bus voltage is supplied to the DC-to-DC converter.

According to an embodiment, a charging control circuit in an in-vehicle charging connector, which is capable of fast charging of an external apparatus and is capable of preventing an instantaneous interruption of data transfer between the in-vehicle apparatus and the external apparatus, can be made smaller.

### BRIEF DESCRIPTION OF THE DRAWINGS

Fig. 1 is a drawing illustrating a charging control circuit in an in-vehicle charging connector according to an embodiment of the present invention.
Fig. 2 is a drawing illustrating a current flow in the charging control circuit in Fig. 1 during a normal operation.
Fig. 3 is a drawing illustrating a current flow in the charging control circuit in Fig. 1 during an irregular operation.
Fig. 4 is a drawing illustrating voltage values in wiring sections when a state transitions from Fig. 2 to Fig. 3.
Fig. 5 is a drawing in which a first switch and a second switch of the charging control circuit of Fig. 1 are each composed of a Pch MOSFET.
Fig. 6 is a drawing illustrating a charging control circuit in an in-vehicle charging connector according to a comparative example.
Fig. 7 is a drawing comparing a size of an in-vehicle charging connector to which a charging control circuit according to an embodiment is applied, with a size of a capacitor used in the charging control circuit according to a comparative example.
Fig. 8 is an exploded view of an in-vehicle according to an embodiment.
Fig. 9 is a drawing illustrating an example of an in-vehicle data-transfer/charging system in a vehicle including an in-vehicle charging connector according to an embodiment.
Fig. 10 is a drawing illustrating places in a vehicle where the in-vehicle charging connector can be mounted.

### DETAILED DESCRIPTION OF THE PREFERRED EMBODIMENTS

In the following, embodiments of the present invention will be described referring to the drawings.

### <Charging control circuit>

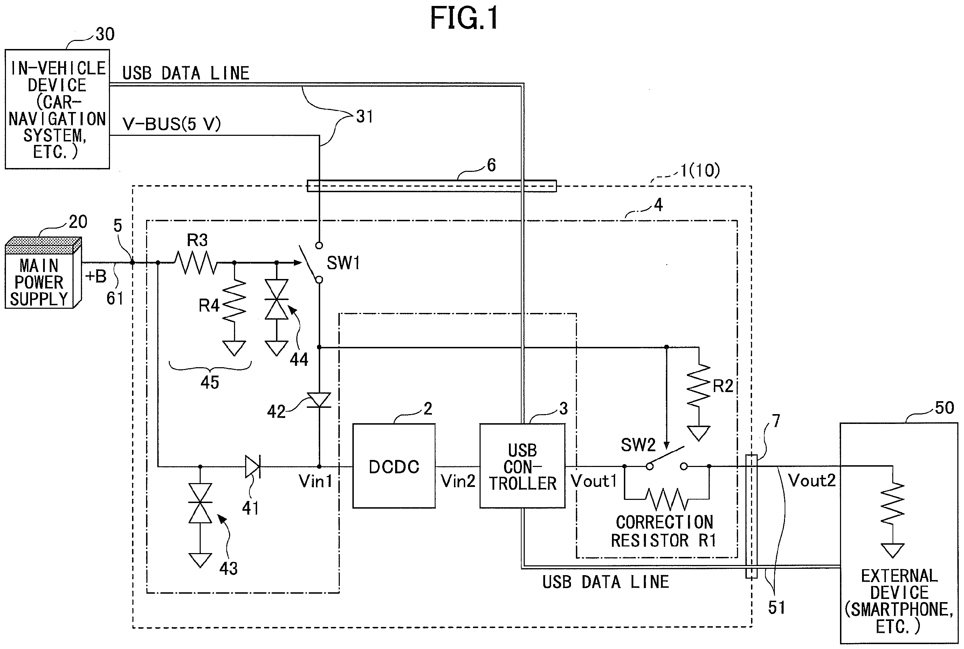

Fig. 1 is a drawing illustrating a charging control circuit 1 in an in-vehicle charging connector 10 according to an embodiment of the present invention. The in-vehicle charging connector 10 is, for example, a USB (Universal Serial Bus) charging connector (charger) included in a vehicle and capable of communicating with an in-vehicle apparatus.

The in-vehicle charging connector 10 is connected to a main power supply 20 for the vehicle, is capable of connecting an in-vehicle apparatus (a car navigation apparatus, an audio apparatus, etc.,) 30, and is capable of connecting an external apparatus 50 as a charging target. It is assumed that the in-vehicle apparatus 30 is an operation target host side apparatus and includes a USB host controller.

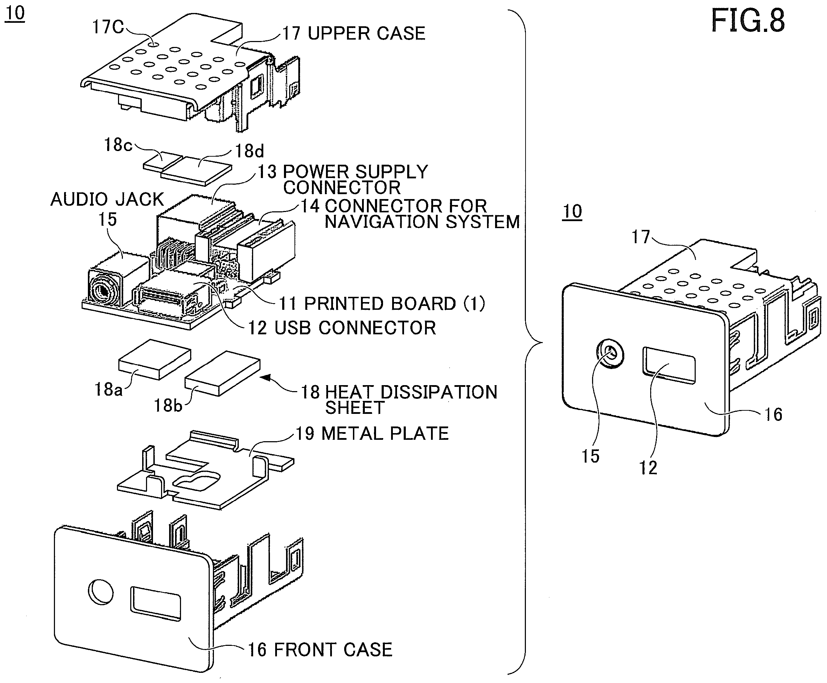

The in-vehicle charging connector 10 includes a USB connector 12 (refer to Fig. 8) as an output terminal 7 of the charging control circuit 1. The USB connector 12 is capable of connecting the external apparatus 50 such as a smartphone, a portable audio player, etc., via a USB cable (data-transfer/charging cable) 51.

The USB connector (USB port) 12 (refer to Fig. 8) as the output terminal 7 and a plug of the USB cable include D (data) +/- serial communication pins, a power supply pin and a GND pin used for supplying a voltage 5 V as a bus power and a current up to 500 mA. With the above arrangement, it is possible to supply power and perform data communications (data transfer, data transmission/reception) between the external apparatus 50 and the in-vehicle charging connector 10.

It is possible for the charging control circuit 1 in the in-vehicle charging connector 10 to switch an input voltage between a voltage from the main power supply 20 for the vehicle (battery voltage +B) and a voltage from the in-vehicle apparatus 30 (bus voltage V-BUS).

Here, it is assumed that, in the in-vehicle apparatus 30 such as a car navigation system, with respect to a voltage drop due to an "idling stop" of the vehicle, a measurement for the voltage drop is provided by including a capacitor with high capacity in order to prevent an operation-stop (instantaneous interruption) and a restart after the stop. It should be noted that the capacitor with high capacity may be included in a secondary power supply 32 used for supplying power to entire car accessories such as a car navigation system, an audio system, etc., which will be described later.

The in-vehicle charging connector 10 is connected to the main power supply 20 via a power supply line (charging power cable) 61 used for delivering a voltage, and is connected to the in-vehicle apparatus 30 via a USB cable (data-transfer/charging cable) 31 used for delivering (transferring, communicating) a voltage and data signals.

Therefore, only power transmission/reception is performed between the in-vehicle charging connector 10 and the main power supply 20 without performing data transfer. On the other hand, it is possible to transmit/receive power and data between the in-vehicle charging connector 10 and the in-vehicle apparatus 30.

With the above-described connection relationships, it is possible to reproduce music, images, etc., stored in the external apparatus 50 or obtained by the external apparatus 50 via the Internet, by using speakers of the vehicle or the car navigation system while charging the external apparatus 50 such as a smartphone via the in-vehicle charging connector 10. Alternatively, it is possible to operate a map application or the like displaying a map on the external apparatus (smartphone, mobile apparatus) 50 on the car navigation system (car navigation apparatus) as an example of the in-vehicle apparatus 30. In other words, it is possible for the external apparatus 50 and the car navigation system to be linked together in handling the audio, video, and/or application.

Here, in the case where the in-vehicle charging connector 10 is used for charging the external apparatus 50 while communicating (performing data transfer) with the external apparatus 50, normally, the charging is performed by receiving power supply (battery voltage +B) from the main power supply 20 which has higher power.

However, there is a case in which a voltage of the main power supply 20 may drop temporarily due to the "idling stop" of the vehicle. Specifically, in an "idling stop" function as an energy saving function, an engine is stopped when the vehicle stops at the traffic light, and the engine is started when the foot of a driver is released from the brake pedal. At this time, a high current flows for the start, the voltage of the main power supply 20 drops sharply, and the voltage becomes very low for a moment, which phenomenon is referred to as a "transient surge".

When the transient surge occurs, the power (battery voltage +B), which is supplied from the main power supply 20 to the in-vehicle charging connector 10, drops. When the supplied voltage becomes less than 5 V, operations of the USB controller of the in-vehicle charging connector 10 stop (instantaneous interruption), which impairs data communications between the external apparatus 50 and the in-vehicle apparatus 30.

For example, when music is being reproduced in the vehicle, if a connection for serial data communication (transfer) between the external apparatus 50 and the in-vehicle apparatus 30 is cut, then the music will be stopped.

An in-vehicle charging connector 10 according to an embodiment will be described below as a connector capable of enabling linked operations between the external apparatus 50 and the in-vehicle apparatus 30 even at the time of "idling stop".

Referring to Fig. 1, a charging control circuit 1 in the in-vehicle charging connector 10 includes, in addition to a DC-to-DC converter 2 and a USB controller (output controller) 3, a small-sized instantaneous interruption measurement circuit 4.

It is possible for the charging control circuit 1 to switch an input voltage between a voltage from the main power supply 20 for the vehicle and a voltage from the in-vehicle apparatus 30 to which a voltage drop measurement is applied when the voltage of the main power supply 20 fluctuates (at the time of "idling stop"). In other words, at the time of "idling stop", when the voltage of the main power supply 20 drops sharply to less than a predetermined value (5 V), the power is supplied from the in-vehicle apparatus 30 to maintain functions of the USB controller 3 and to prevent the USB connection, or, specifically, a data connection state between the in-vehicle apparatus 30 and the external apparatus 50 via the USB cable, from being cut.

The DC-to-DC converter (regulator) 2 converts the voltage of the supplied power to a predetermined USB charging voltage, 5 V.

The USB controller (USB device controller) 3 is an output controller, and sets a charging amount for the external apparatus 50 while monitoring the USB data line. The USB controller 3 controls the data transfer between the in-vehicle apparatus 30 and the external apparatus 50 by monitoring the USB data line. In setting the charging amount, the USB controller 3 determines a charging profile of an external apparatus 50 to be connected and sets a supplying current for the external apparatus 50. Specifically, the USB controller 3 sets the charging profile indicating whether a constant current charging or a constant voltage charging is used for the external apparatus 50 according to a charging state of a charging cell mounted on the external apparatus 50 and a power use state of the external apparatus 50, and controls an output current according to the profile.

In the charging control circuit 1, in the case where the voltage supplied from the main power supply 20 drops (sharply) to less than a predetermined voltage, functions of the USB controller 3 are prevented from stopping by switching the power supply source to a voltage supplied from the in-vehicle apparatus 30, and the data connection state between the in-vehicle apparatus 30 and the external apparatus 50 is maintained by causing a flowing current amount to be less than that of a normal fast charging state.

Referring to Fig. 1, the instantaneous interruption measurement circuit 4 includes switches SW1, SW2, a correction resistor R1, and back flow prevention devices 41, 42.

The first switch SW1 is configured to be connected to a bus input terminal 6 to which a voltage is input from the in-vehicle apparatus (host side) 30 and connected to the DC-to-DC converter 2. The first switch SW1 switches between supply and cut-off from the voltage input from the in-vehicle apparatus 30 (bus voltage V-BUS) to the DC-to-DC converter 2 according to the voltage input from the main power supply 20 (battery voltage +B). Specifically, when the battery voltage +B input from the main power supply 20 drops to less than the predetermined voltage, the power supply source is switched to the 5 V bus voltage V-BUS input from the in-vehicle apparatus 30, and thus, the output voltage is prevented from becoming 5 V or less.

The correction resistor R1 is connected between an output terminal connected to an external apparatus (terminal) 50, and the USB controller 3, and limits an output current flowing to an output terminal 7. By limiting the output current, a voltage drop of an output voltage Vout1 from the USB controller 3 is reduced.

As described above, an output voltage Vout2 of the charging control circuit 1 is decreased due to the correction resistor R1 and the output voltage Vout1 from the USB controller 3 is maintained at a predetermined voltage (5 V), and thus, it is possible for the USB controller 3 to maintain controlling the data transfer between the in-vehicle apparatus 30 and the external apparatus 50.

The second switch SW2 is connected in parallel with the correction resistor R1 and connected in series to the first switch SW1. The second switch SW2 is used for causing a current to flow to the correction resistor R1 during a period when the bus voltage V-BUS input from the in-vehicle apparatus 30 is supplied to the DC-to-DC converter 2.

The first back flow prevention device 41 is connected between a battery input terminal 5, to which a voltage from the main power supply 20 (battery voltage +B) is supplied, and the DC-to-DC converter 2.

The second back flow prevention device 42 is connected between the first switch SW1 and the DC-to-DC converter 2.

The back flow prevention devices 41, 42 are diodes used for preventing a current back flow from the DC-to-DC converter 2.

Further, it is preferable that the instantaneous interruption measurement circuit 4 include suppression devices 43, 44, a voltage dividing circuit 45, and an earth resistance R2.

The first suppression device 43 suppresses a transient surge of the battery voltage +B input from the main power supply 20 upstream of the DC-to-DC converter 2.

The second suppression device 44 suppresses a transient surge of the battery voltage +B input from the main power supply 20 upstream of the first switch SW1.

The suppression devices 43, 44 are, for example, avalanche diodes. Because an avalanche diode has high energy absorption capabilities, the suppression devices 43, 44 suppress an over-voltage spike and a transient surge, and protect the DC-to-DC converter 2.

The voltage dividing circuit 45 determines a voltage value at which the first switch SW1 is switched upstream of the second suppression device 44.

The earth resistance R2 is located in parallel with the switch SW2, and is connected to the earth (ground) in order to flow a leakage current.

Here, controlling of switches SW1, SW2 in the charging control circuit 1 will be described.

### <When operating normally>

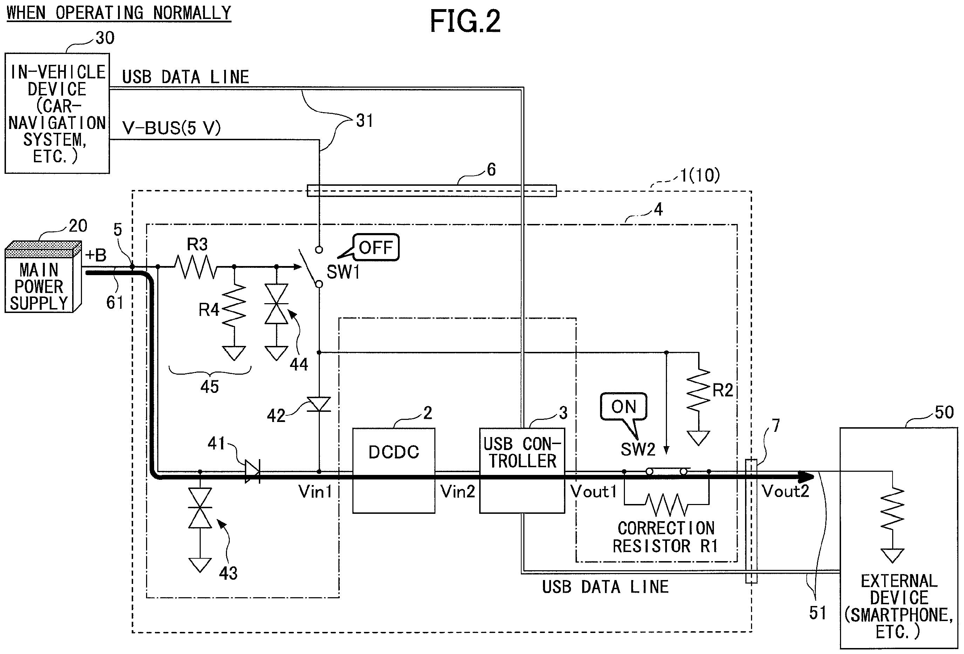

Fig. 2 illustrates a current flow in the charging control circuit 1 in Fig. 1 when operating normally.

In Fig. 2, the first switch SW1 is in an OFF state and the second switch SW2 is in an ON state. Behaviors of ON/OFF state of the switches SW1, SW2 are opposite to each other. Operation examples are shown in Table 1.

**[Table 1]**

| +B | SW1 | Vin | SW2 | Vout1 | Vout2 |
|---|---|---|---|---|---|
| 14 V | OFF | 14 V | ON | 5V | 5V |
| 10 V | OFF | 10 V | ON | 5V | 5V |
| 5 V | - | 5 V | ON/OFF | 5V | 5V |
| 3 V | ON | 5 V | OFF | 5V | LESS THAN 5 V * |
| 0 V | ON | 5 V | OFF | 5V | LESS THAN 5 V * |
| -5 V | ON | 5 V | OFF | 5V | LESS THAN 5 V * |

During a normal operation, for example, the battery voltage +B from the main power supply 20 fluctuates between 12.5 V and 14.5 V when running, and fluctuates between 9 V and 10 V when starting an engine.

Therefore, according to Fig. 2 and Table 1, during a normal operation, a voltage from the main power supply 20 of the vehicle is supplied to the DC-to-DC converter 2. Further, the current flowing from the USB controller 3 to the output terminal 7 does not go through the correction resistor R1.

### <When returning from the "idling stop">

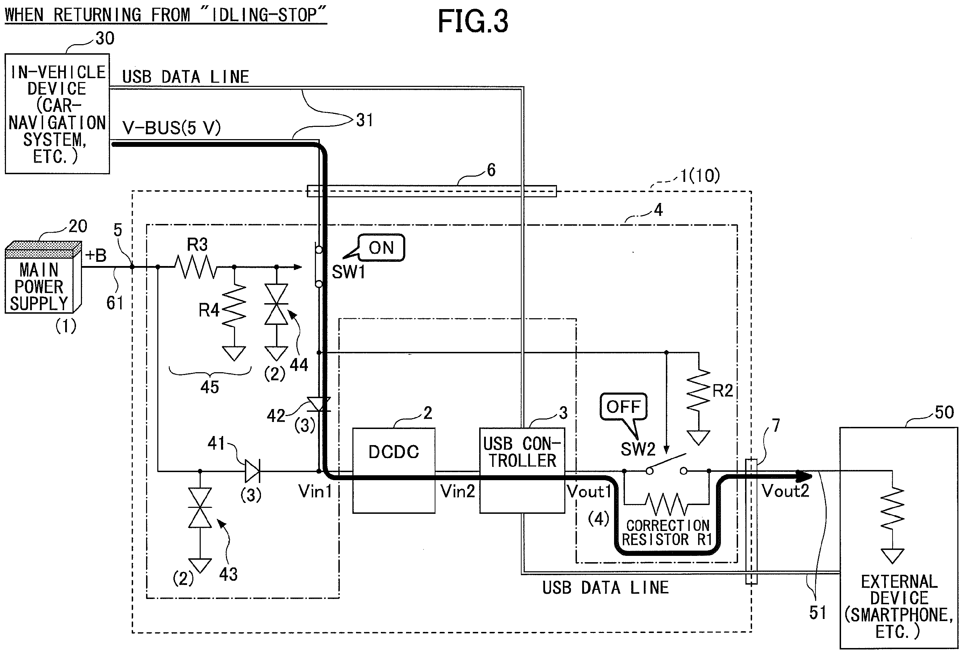

Fig. 3 illustrates a current flow in the charging control circuit 1 in Fig. 1 when returning from the "idling stop".

The battery voltage +B from the main power supply 20 is input to a control terminal of the switch SW1. As illustrated in Table 1, when the battery voltage +B from the main power supply 20 drops to less than a predetermined voltage, the switch SW1 is turned ON as shown in Fig. 3. It should be noted that it is assumed that the predetermined voltage, at which the ON/OFF states of the switches SW1, SW2 are switched, is 5 V in an example in Table 1.

Further, a voltage after going through the switch SW1 is input to a control terminal of the switch SW2. As illustrated in Table 1, when the switch SW1 is turned ON, the switch SW2 is turned OFF and a current goes through the correction resistor R1.

As a result, a voltage from the in-vehicle apparatus 30 is supplied to the DC-to-DC converter 2. Further, the current flowing from the USB controller 3 to the output terminal 7 goes through the correction resistor R1. With the above operations, after an output from the USB controller 3 whose output voltage Vout1 is 5 V, the current goes through the correction resistor R1, and thus, the output voltage Vout2 of the charging control circuit 1 is less than 5 V.

### <Role of correction resistor>

In the in-vehicle charging connector 10, there is a case in which, in a state where fast charging is performed for the external apparatus 50, the power supplied from the main power supply 20 is instantaneously interrupted (temporarily interrupted), the power supply source is switched from the main power supply 20 to the in-vehicle apparatus 30, and a power supply of the in-vehicle apparatus 30 does not have an output current sufficient for the fast charging.

Because the external apparatus 50 draws the current in spite of the insufficient current supply capability, an output voltage of the USB controller 3 decreases (e.g., 1.05 V) and an operation failure occurs in which the data transfer is interrupted.

For example, in the case where the fast charging with 5[V]/2.4[A] is performed by using a voltage from the main power supply 20, an impedance of the external apparatus 50 viewed from an output of the USB controller 3 is 2.1 Ω (ohm).

In this state, if the power supply source is switched to the power (voltage*current) from the in-vehicle apparatus 30 due to a sharp drop of the battery voltage +B from the main power supply 20 in order to avoid the instantaneous data transfer interruption, then, because an output current is limited to 0.5 A, the voltage supplied to the external apparatus 50 drops to 0.5[A]*2.1[Q]=1.05[V].

Therefore, when the voltage from the in-vehicle apparatus 30 is used, a path is provided in which the route is switched to go through the correction resistor R1. With the correction resistor R1, the impedance viewed from the USB controller 3 (impedance of the correction resistor R1 + impedance of the external apparatus 50) is increased and the voltage is prevented from dropping when the current is dropped. The resistance value of the correction resistor R1 is, for example, 7.9[Q].

As described above, it is possible to prevent the charging control circuit 1 from stopping operations and to prevent an data communication failure from occurring between the in-vehicle apparatus 30 and the external apparatus 50 by detecting the instantaneous interruption of a battery line and by changing the power supply source for charging the external apparatus 50 to the in-vehicle apparatus (car navigation system) 30.

### <Noise applying test>

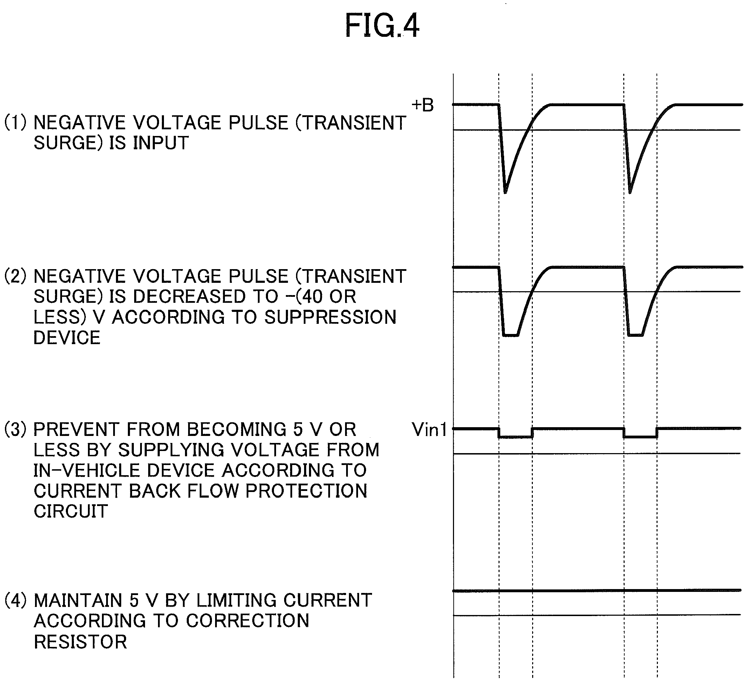

Fig. 4 illustrates voltage values in wiring sections when the state transitions from Fig. 2 to Fig. 3.

It is assumed that, in (1), imitating a transient surge (a pulse that is generated transiently), which is a power supply pulse when returning from the "idling stop", a battery voltage +B equal to or less than 0[V] (- (up to 100) [V]) is applied to the battery input terminal 5, to which a voltage from the main power supply 20 is supplied, for 2 ms.

As illustrated in Fig. 4, in (2), the suppression devices 43, 44 suppress a negative voltage pulse as the transient surge (a pulse indicating a sharp drop of the battery voltage +B) to -(up to 40) V.

In (3), the back flow prevention devices 41, 42 protect circuits from the current back flow, the supply source of the charging voltage is changed by switching of the switch SW1, and an input of the DC-to-DC converter 2 is prevented from becoming 5 V or less by receiving a voltage supplied from the in-vehicle apparatus (car navigation system) 30 (refer to a voltage Vin1).

In (4), an output voltage Vout1 of the USB controller 3 is maintained at 5 [V] by limiting the current by using the correction resistor R1.

### <Circuit example>

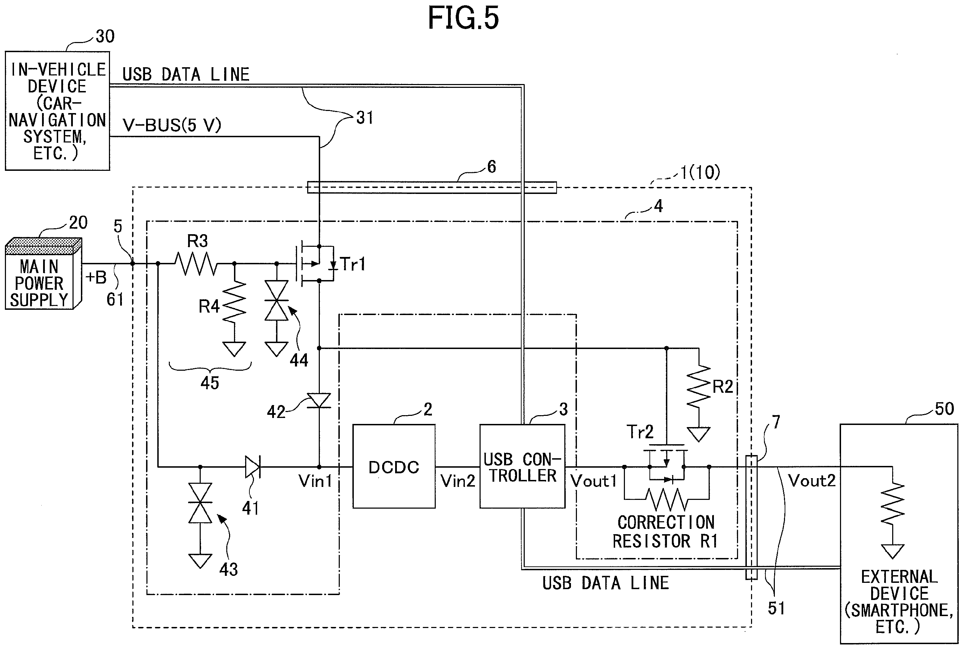

Fig. 5 illustrates a circuit diagram in which the first switch SW1 and the second switch SW2 of the charging control circuit 1 are composed of pMOSFET (Positive channel Field Effect Transistor) (Tr1, Tr2).

The battery voltage +B of the main power supply 20 is input to a gate terminal of the first pMOSFET Tr1. Due to characteristics of a PchFET, the first pMOSFET Tr1 maintains an OFF state in a case where the battery voltage +B is H, and switches to an ON state when the battery voltage +B turns to L.

A voltage right after the first pMOSFET Tr1 is input to a gate terminal of the second pMOSFET Tr2. Therefore, during a normal operation, in the case where the first pMOSFET Tr1 is in an OFF state, 0 V is applied to the second pMOSFET Tr2 according to the earth resistance R2, and thus, the second pMOSFET Tr2 is in an ON state. When the second pMOSFET Tr2 is in an ON state, the current goes through a path, in which the second pMOSFET Tr2 is located, without bypassing to the correction resistor R1. Further, when the battery voltage +B turns to L, the first pMOSFET Tr1 is turned ON and a voltage 5 V is applied to the second pMOSFET Tr2, and thus, the second pMOSFET Tr2 is switched to an OFF state.

The above-described behaviors of the pMOSFET Tr1, Tr2 correspond to ON/OFF states of the switches SW1, SW2 in Table 1.

As described above, by providing the instantaneous interruption measurement in the charging control circuit, even when a transient surge is applied during a fast charging in which a charging current exceeds 1.0 [A], it is possible to maintain the communication state by changing to a non-fast charging state.

### <Comparative example>

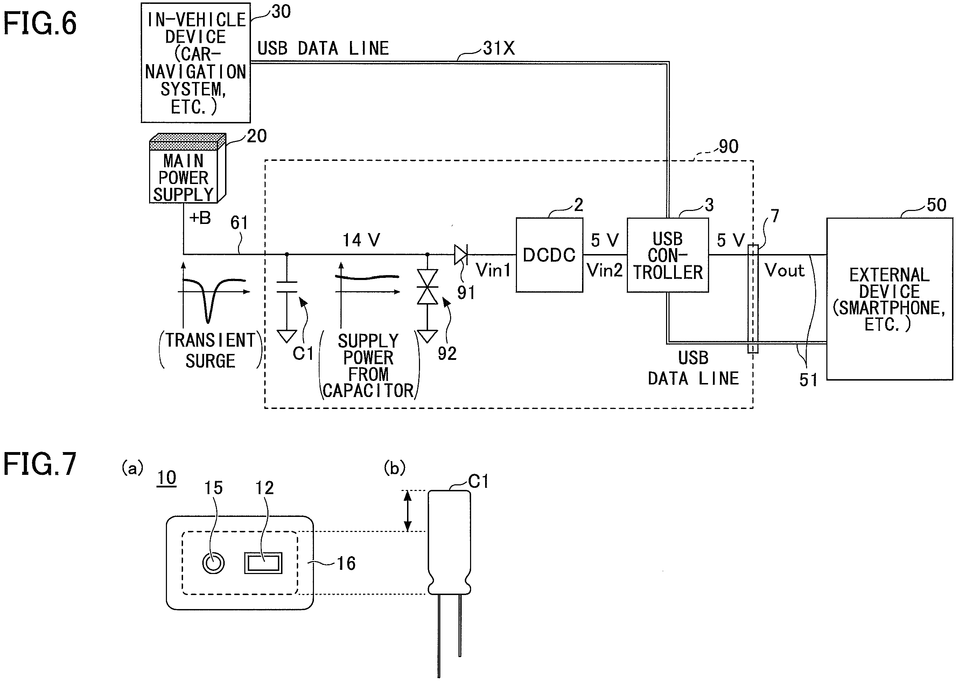

Fig. 6 is a drawing illustrating a charging control circuit in an in-vehicle charging connector according to a comparative example. It is assumed that, in the charging control circuit according to a comparative example, a capacitor is arranged as a measurement for the instantaneous interruption due to a transient surge (sharp drop of the battery voltage +B).

Specifically, in the comparative example, a capacitor C1 is arranged in the power supply line of the charging control circuit 90 of the in-vehicle charging connector, and, the reduction in power in the case of an instantaneous interruption due to a transient surge will be compensated by the power stored in the capacitor C1.

Further, in the comparative example, the in-vehicle apparatus 30 and the charging control circuit 90 are connected via a data line 31X, by which only data transfer is performed and power transfer is not performed.

In this way, when the capacitor C1 is used for the instantaneous interruption measurement, it is possible to make the circuit simpler.

However, it is required that the size of the capacitor C1 used for supplying the missing power increase as a current flowing in the product increases. In a case of a product including a fast charger in which a high current is used, a capacitor with approximately 5000 µF is needed. As a result, the product size of the in-vehicle charging connector as a fast charger becomes larger in accordance with the size of the capacitor.

Fig. 7 is a drawing comparing a size of a small-sized in-vehicle charging connector 10 to which a charging control circuit 1 according to an embodiment is applied, with a size of the capacitor C1 used in the charging control circuit according to a comparative example.

In a case of a product such as an in-vehicle charging connector which uses a high current, the capacity of an electrolytic capacitor may become approximately 5000 *µ*F. This capacity requires a capacitor with diameter *φ* 16 mm x 40 mm, which significantly affects the product size.

In the case where the size of the product needs to be reduced because of a limited mounting space of the in-vehicle charging connector in the vehicle or because of a request for increased mounting place flexibility, if the product size should be 45.0 mm (width) x 56.2 mm (depth) x 32.0 mm (height), then an electrolytic capacitor with the desired characteristics cannot be included.

With respect to the above, in an embodiment of the present invention, a measurement for the instantaneous interruption is provided, instead of by using a big electrolytic capacitor that requires a big space, by using a part smaller than the electrolytic capacitor.

Therefore, in an embodiment of the present invention, it is possible to make a circuit area smaller because the power supply source is switched by using a small-sized resistor and switch without using a capacitor.

However, with respect to a charging control circuit 1 according to an embodiment in Fig. 1, complexity of the circuit is slightly higher than the charging control circuit 90 in Fig. 6 because the number of included elements is greater, and there is a possibility of heat generation because there is a current constantly flowing in the switches.

Therefore, as illustrated in Fig. 8, a size-reduced in-vehicle charging connector is arranged to release heat in order to reduce the heat generation amount.

### <In-vehicle charging connector>

Fig. 8 illustrates an overall view and an exploded view of an in-vehicle charging connector (connector module) 10 according to an embodiment of the present invention. The in-vehicle charging connector 10 is connected to the main power supply 20 for the vehicle, and is capable of connecting the in-vehicle apparatus 30 and the external apparatus 50 while enabling data transfer between the in-vehicle apparatus 30 and the external apparatus 50.

The in-vehicle charging connector 10 includes a printed-circuit board (printed-circuit substrate) 11, a USB connector 12, a power supply connector 13, a navigation system connector 14, an audio jack 15, a front case 16, an upper case 17, heat dissipation sheets 18a-18d, and a metal plate 19.

The above-described charging control circuit 1 is mounted on the printed-circuit board 11. It should be noted that, other than the charging control circuit 1, a small-sized capacitor, an ESD, etc., are mounted as a noise measurement circuit on the printed-circuit board 11.

The USB connector (data-transfer/charging connection port, USB port) 12 is a terminal, into which a plug of a USB cable 51 connected to the external apparatus 50 is plugged, used for providing data-transfer from the external apparatus 50 and for providing a charging voltage to the external apparatus 50. The USB connector 12 corresponds to the output terminal 7 of the charging control circuit 1.

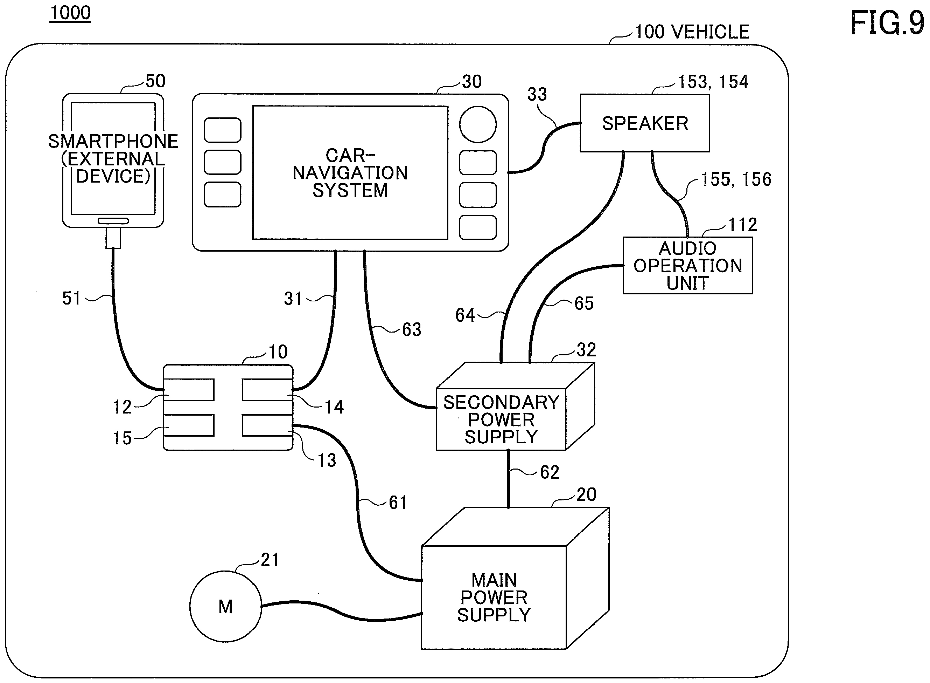

The power supply connector 13 is a terminal used for connecting a power line 61 connected to the main power supply 20 (refer to Fig. 1 and Fig. 9), and corresponds to the battery input terminal 5 of the charging control circuit 1.

The navigation system connector 14 is a terminal used for connecting a USB cable 31 connected to the in-vehicle apparatus (car navigation system, etc.,) 30, and corresponds to the battery input terminal 6 of the charging control circuit 1. It should be noted that the power supply connector 13 and the navigation system connector 14 may be formed as a combination connector.

The audio jack 15 is an audio input/output terminal, into which a plug of an AUX (Auxiliary) cable connected to the external apparatus 50, other audio players, or a mike, is plugged as necessary.

The front case (lower case) 16 is integrally formed by a front plate, which includes openings corresponding to the USB connector 12 and the audio jack 15, and a bottom plate.

The upper case 17 is engaged with the front case 16 to form an outline of the in-vehicle charging connector 10. Here, in order to increase heat dissipation effect, it is preferable that the upper case 17 be made of aluminum.

On a surface of the upper case 17, multiple round dents 17C are formed in order to increase heat dissipation effects for the heat from electronic elements of the circuit which heat tends to be generated due to size reduction of the circuit without including a capacitor as described above. As a result of arranging the multiple round dents 17C in a row, the surface area of the upper case 17 is increased, heat dissipation portions are increased, and the heat dissipation effects are increased.

It should be noted that, in this example, the surface area is increased by forming the multiple round dents 17C. However, the surface area may be increased by forming grooves or by forming dents with different shapes. In the case of processing the surface of the upper case 17, in order to prevent the noise from outside from affecting the circuit inside the case, and in order to secure heat dissipation effects of the aluminum, it is preferable that dents or grooves created by the processing do not penetrate the upper case 17.

Further, the heat dissipation sheets 18a-18d are arranged for dissipating the heat generated from the electronic elements mounted on the printed-circuit board 11. The heat dissipation sheets 18a-18d are, for example, thermally conductive rubbers (packings).

The heat dissipation sheets 18a, 18b are attached to the USB controller mounted on a lower surface of the printed-circuit board 11 and to back flow prevention diodes of the battery line, and are used for absorbing heat from the lower surface of the printed-circuit board 11.

The metal plate 19 is sandwiched between the heat dissipation sheets 18a, 18b of the lower surface and a lower surface plate of the front case 16. The metal plate 19 is, for example, made of aluminum, and has an effect of absorbing heat from the printed-circuit board 11 and dissipating the heat to the outside.

Further, the heat dissipation sheets 18c, 18d are attached to upper surfaces of the DC-to-DC converter 2 and parts surrounding the DC-to-DC converter 2, and absorb heat from the upper surface of the printed-circuit board 11. The DC-to-DC converter 2 and the parts surrounding the DC-to-DC converter 2 are circuits for converting a voltage of the supplied power to a predetermined voltage for the USB charging, 5 V, and generate heat according to the voltage conversion efficiency. The heat dissipation sheets 18c, 18d are included for dissipating the generated heat.

Here, with respect to the DC-to-DC converter 2 and the USB controller 3, which are ICs that tend to generate heat in the charging control circuit 1, temperatures were evaluated by adding a voltage at ambient temperatures +25 degrees Celsius and +70 degrees Celsius. Table 2 illustrates specifications. Table 3 illustrates saturation temperature measurement results for charging current 2.4 A. Table 4 illustrates saturation temperature measurement results for charging current 2.7 A.

Specifically, maximum permitted junction temperatures (Tjmax) in Table 2 are those written in the data sheet, and permitted temperatures (Tj) are specification temperatures in which a 20% margin is removed from the maximum permitted junction temperatures (Tjmax).

**[Table 2]**

| ■ SPECIFICATIONS | | |
|---|---|---|
| | DCDC [°C] | USB CONTROLLER [°C] |
| MAXIMUM PERMITTED JUNCTION TEMPERATURE (Tjₘₐₓ) | 150 | 155 |
| PERMITTED TEMPERATURE (Tj = Tjₘₐₓ x 80%) | 125 | 129 |

**[Table 3]**

| ■CHARGING CURRENT 2.4 A_TEMPERATURE EVALUATION RESULT | | | |
|---|---|---|---|
| AMBIENT TEMPERATURE | APPLIED VOLTAGE | DCDC [°C] | USB CONTROLLER [°C] |
| 25 °C | 9 V | 61.56 | 62.96 |
| | 14 V | 59.82 | 60.40 |
| | 16 V | 60.15 | 60.28 |
| 70 °C | 9 V | 106.36 | 108.78 |
| | 14 V | 104.63 | 105.52 |
| | 16 V | 105.01 | 105.29 |

**[Table 4]**

| ■CHARGING CURRENT 2.7 A_TEMPERATURE EVALUATION RESULT | | | |
|---|---|---|---|
| AMBIENT TEMPERATURE | APPLIED VOLTAGE | DCDC [°C] | USB CONTROLLER [°C] |
| 25 °C | 9 V | 70.85 | 73.41 |
| | 14 V | 67.12 | 68.40 |
| | 16 V | 67.28 | 68.08 |
| 70 °C | 9 V | 116.97 | 120.54 |
| | 14 V | 110.98 | 112.59 |
| | 16 V | 113.03 | 114.24 |

Referring to Table 3, when charging was performed by applying a charging current 2.4 A, which is specified as USB fast charging, temperatures of ICs of the DC-to-DC converter 2 and the USB controller 3 were within the permitted temperatures (Tj) of the ICs illustrated in Table 2.

Further, referring to Table 4, when charging was performed by applying charging current 2.7 A, temperatures of the ICs were within the permitted temperatures (Tj) of the ICs illustrated in Table 2. Therefore, the possible increased heat problem due to the size reduction can be solved by introducing the above-described heat dissipation structures.

Further, referring to Table 3 and Table 4, in the in-vehicle charging connector 10 with multiple heat dissipation structures, temperatures of the ICs were within the specification illustrated in Table 2 even under the high temperature environment (+70 degrees Celsius). Therefore, it can be said that the thermal design is good enough for performing the fast charging with charging current 2.4 A and the fast charging with charging current 2.7 A.

### <In-vehicle data-transfer/charging system>

Fig. 9 is a drawing illustrating an example of an in-vehicle data-transfer/charging system 1000 including an in-vehicle charging connector 10 in a vehicle 100 according to an embodiment. It should be noted that the vehicle 100 has an "idling stop" function.

The in-vehicle data-transfer/charging system 1000 includes a secondary power supply 32 as a sub-battery, in addition to a main power supply 20 as a main battery, a car navigation system 30 as an example of an in-vehicle apparatus, and an in-vehicle charging connector 10. It is assumed that the secondary power supply 32 is for an in-vehicle apparatus, and is provided with an instantaneous interruption measurement when the main power supply 20 fluctuates. For example, the secondary power supply 32 includes a big-sized capacitor as the instantaneous interruption measurement. It should be noted that the secondary power supply 32 may be integrally formed in the in-vehicle apparatus 30.

The external terminal 50 and the in-vehicle charging connector 10 are connected via a USB cable (data-transfer/charging cable) 51, and the car navigation system 30 and the in-vehicle charging connector 10 are connected via a USB cable 31.

The main battery (main power supply) 20 and the in-vehicle charging connector 10 are connected via a power line 61, and the main battery 20 and the sub battery 32 are connected via a power line 62. The power lines 61, 62 are not required to have a data transferring function.

With the above arrangement, in the system 1000, it is possible to maintain a connection state between the external apparatus 50 and the car navigation system 30 without interrupting the data-transfer from the external apparatus 50 even when the "idling stop" is performed.

Further, the system 1000 may further include speakers 153, 154, and an audio operation unit 112. The car navigation system 30, the speakers 153, 154, and the audio operation unit 112 are connected to the sub power supply 32 via power lines 63, 64, 65, respectively.

The car navigation system 30 is connected to the speakers 153, 154 via a data-transfer cable 33. The audio operation unit 112 is connected to the speakers 153, 154 via data-transfer cables 155, 156. The data-transfer cables 33, 155, 156 are not required to have a charging function.

With the above arrangement, it is possible to output music stored in the external apparatus 50 from the speakers 153, 154 without interrupting the data-transfer from the external apparatus 50 even when the "idling stop" is performed in the vehicle 100.

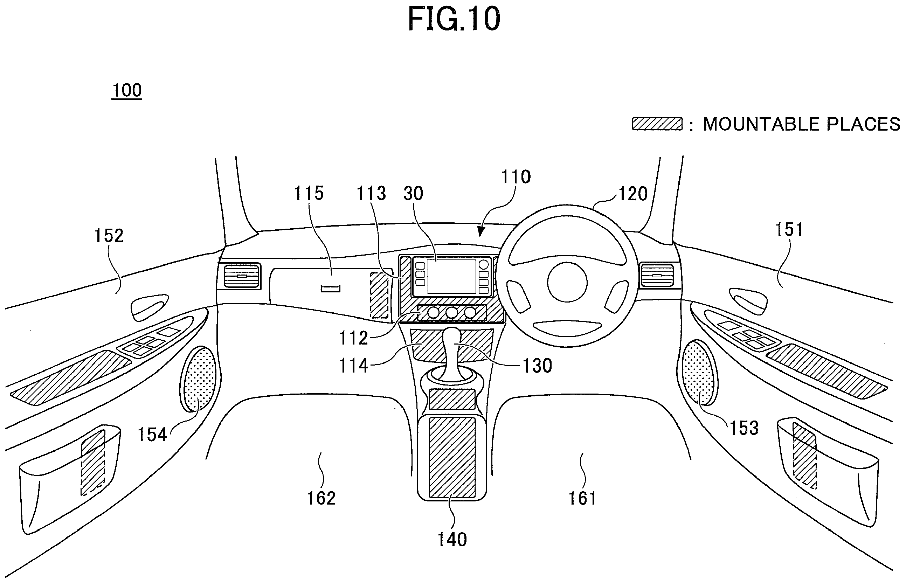

Fig. 10 is a drawing illustrating places in a vehicle where a fast charging connector can be mounted. As illustrated in Fig. 10, the in-vehicle charging connector 10 can be mounted on a dash board 110, a console 140, or doors 151, 152 of the vehicle 100.

Alternatively, the in-vehicle charging connector 10 may be included near the car navigation system 30 of a central panel 113 in the central front portion of the vehicle 10, may be included in the audio operation unit 112, or may be included in a luggage space (near a cup-holder) 114 in the lower portion of the central panel 113. The in-vehicle charging connector 10 may be mounted inside a glove box 115 in front of the front passenger seat.

Further, the in-vehicle charging connector 10 may be mounted inside the interior appointments of a vehicle, or embedded in the outside of the occupants space when mounting the in-vehicle charging connector 10 on the vehicle.

Therefore, the in-vehicle charging connector 10 can be included in the vehicle without being an obstacle in the occupants space.

It should be noted that the arrangement of the vehicle in Fig. 10 is only an example. The in-vehicle charging connector 10 can be included in a vehicle with a different design. For example, the in-vehicle charging connector 10 may be included in a place (not shown) away from the speakers 153, 154 of the doors 151, 152.

Regardless of a location where the in-vehicle charging connector 10 is mounted, it is preferable that the upper part of the in-vehicle charging connector 10 be prevented from making close contact with other members in order to allow heat dissipation from the upper case 17 of the in-vehicle charging connector 10 made of aluminum.

The preferred embodiments have been described. However, the embodiments are not limited to as described above, and various modifications and replacements may be applied to the above embodiments without departing from the scope of claims.

The present application is based on and claims the benefit of priority of Japanese Priority Application No. 2016-138764 filed on July 13, 2016, the entire contents of which are hereby incorporated herein by reference.

## Claims

1. A charging control circuit of an in-vehicle charging connector, connected to a main power supply for a vehicle, connecting an in-vehicle apparatus with a charging-target external apparatus, and enabling data-transfer between the in-vehicle apparatus and the external apparatus, the charging control circuit comprising:
a DC-to-DC converter, to which a battery voltage input from the main power supply or a bus voltage input from the in-vehicle apparatus is supplied, which converts the supplied voltage to a predetermined voltage;
an output controller that controls the data-transfer between the in-vehicle apparatus and the external apparatus, and determines a charging current for the external apparatus; and
an instantaneous interruption measurement circuit that prevents an instantaneous interruption of the data-transfer between the in-vehicle apparatus and the external apparatus when the battery voltage drops to less than the predetermined voltage,
wherein the instantaneous interruption measurement circuit includes
a first switch that switches between supply and cut-off from the bus voltage to the DC-to-DC converter according to the battery voltage,
a correction resistor that is connected between an output terminal connected to the external apparatus and the output controller, and that limits an output current flowing to the output terminal, and
a second switch, which is connected in parallel with the correction resistor and connected in series with the first switch, which causes a current to flow to the correction resistor during a period when the bus voltage is being supplied to the DC-to-DC converter.

2. The charging control circuit of an in-vehicle charging connector according to claim 1, wherein
the instantaneous interruption measurement circuit includes a first back flow prevention device connected between a battery input terminal, to which the battery voltage is supplied, and the DC-to-DC converter, and
a second back flow prevention device connected between the first switch and the DC-to-DC converter.

3. The charging control circuit of an in-vehicle charging connector according to claim 2, wherein
the instantaneous interruption measurement circuit includes a first suppression device that suppresses a pulse indicating the drop of the battery voltage upstream of the first back flow prevention device, and
a second suppression device that suppresses the pulse upstream of the first switch.

4. The charging control circuit of an in-vehicle charging connector according to claim 3, wherein
the first suppression device and the second suppression device are avalanche diodes.

5. The charging control circuit of an in-vehicle charging connector according to claim 3 or 4, wherein
the instantaneous interruption measurement circuit includes a dividing voltage circuit that determines a voltage value at which the first switch is switched upstream of the second suppression device.

6. The charging control circuit of an in-vehicle charging connector according to any one of claims 1 to 5, wherein
the first switch and the second switch are pMOSFETs.

7. An in-vehicle charging connector comprising:
the charging control circuit according to any one of claims 1 to 6;
a data-transfer/charging connection port that is the output terminal of the charging control circuit;
a substrate on which the charging control circuit is formed;
an upper case made of aluminum;
a lower case in which a front plate with an opening for the data-transfer/charging connection port and a bottom plate are integrally formed; and
one or more heat dissipation sheets.

8. The in-vehicle charging connector according to claim 7, wherein
a metal plate is disposed on the bottom plate of the lower case, and
the in-vehicle charging connector includes the metal plate and the substrate.

9. The in-vehicle charging connector according to claim 8, wherein
a plurality of round dents are disposed on a surface of the upper case.

10. An in-vehicle data-transfer/charging system for an external apparatus comprising:
a main power supply for an vehicle;
an in-vehicle apparatus; and
the in-vehicle charging connector according to any one of claims 7 to 9 which is connected to the main power supply via a power line, connected to the in-vehicle apparatus via a data-transfer/charging cable, and connected to the external apparatus via a data-transfer/charging cable.

11. The in-vehicle data-transfer/charging system for an external apparatus according to claim 10, wherein
the in-vehicle apparatus is a car navigation apparatus, and
the external apparatus and the car navigation system are enabled to be linked together in playing audio, video, and/or performing an application.
